# EUROPÄISCHE PATENTSCHRIFT

(11) **EP 0 358 139 B1**
(45) Veröffentlichungstag und Bekanntmachung des Hinweises auf die Patenterteilung: **16.06.1993**
(21) Anmeldenummer: 89116271.1
(22) Anmeldetag: 04.09.1989
(51) Int. Cl.: F02C 9/28

(54) **Regelverfahren und Regeleinheit**
Regulation method and unit
Système et méthode de régulation

(30) Priorität: 09.09.1988 DE 3830805
(43) Veröffentlichungstag der Anmeldung: 14.03.1990
(73) Patentinhaber: MTU MOTOREN- UND TURBINEN-UNION MÜNCHEN GMBH, D-80976 München (DE)
(72) Erfinder: Schwamm, Friedrich, D-8011 Zorneding (DE)

(56) Entgegenhaltungen:
- EP-A- 0 064 437
- EP-A- 0 092 425
- EP-A- 0 199 038
- DE-A- 2 530 494
- DE-A- 3 402 358
- US-A- 3 672 163

## Beschreibung

Die Erfindung betrifft ein Regelverfahren und eine Regeleinheit mit einem Proportional- und einem Integralzweig bei dem durch Differenzbildung aus einem Sollwert und einem Istwert ein Regel-Abweichungssignal gewonnen wird, und mit dem Regel-Abweichungssignal eine proportionale und parallel dazu eine integrale Verstärkung zur Gewinnung eines integral und eines proportional verstärkten Regel-Abweichungssignales durchgeführt wird und dann ein Stellsignal aus der Summe des proportional und des integral verstärkten Regel-Abweichungssignale gebildet wird.

Ein derartiges Verfahren bzw. eine derartige Reglereinheit ist aus der EP 92 425 bekannt geworden, die zur Regelung einer Fluggasturbine dient. Dieses ist als Mehrgrößenregelverfahren ausgeführt, wobei als Regelgrößen die Drehzahl einer Gasgeneratorwelle, ein Verdichterausgangsdruck, eine Nutzturbinendrehzahl und eine Verdichtereingangstemperatur vorgesehen sind. Entsprechend einem von dem Piloten verstellbaren Gashebel und diesen Regelgrößen wird als Stellwert ein bestimmter Brennstoffdurchsatz eingestellt, der in die Brennkammer der Gasturbine eingespritzt wird.

Ähnliche Anordnungen sind aus der DE-OS 34 02 358 und der DE-OS 25 30 494 bekannt geworden. Bei der Regelung einer Gasturbine muß berücksichtigt werden, daß eine Vielzahl von Grenzwerten nicht überschritten bzw. unterschritten werden dürfen, um eine Zerstörung zu verhindern bzw. den Betrieb des Triebwerkes zu gewährleisten. So sind aus mechanischen Gründen maximale Drehzahlen der Gaserzeuger- und Leistungsturbinenwellen vorgegeben die unter allen Betriebsbedingungen eingehalten werden müssen. Ferner dürfen gewisse Maximaltemperaturen nicht überschritten werden, um eine Zerstörung der thermisch beanspruchten Bauteile, beispielsweise der Turbinenschaufeln zu verhindern. Minimale Werte können vorgegeben sein, um ein Erlöschen des Triebwerkes zu verhindern, bzw. unter bestimmten Flugbedingungen eine Beschädigung des Triebwerks durch zu rasche Abkühlung zu verhindern.

Zu diesem Zweck werden die im Triebwerk gemessenen Istwerte der Regelgrößen mit Sollwerten zur Ermittlung von Fehlersignalen verglichen. Die Sollwerte können fix vorgegeben sein, in Form von Tabellen oder Funktionen gespeichert sein, oder manuell vorgegeben werden. Ferner können diese Sollwerte in Form von Grenzwerten vorliegen, wobei in der Regeleinheit geprüft wird, ob ein Istwert den entsprechenden Grenzwert erreicht oder sogar überschritten hat. Die ermittelten Fehlersignale werden in der nachfolgenden Minimumauswahl dahingehend überprüft, welches Fehlersignal die geringste Größe aufweist, d. h. welcher Istwert seinem Sollwert (Grenzwert) am nächsten kommt. Dieses gewinnende kleinste Signal bestimmt die Regelcharakteristik der Regeleinheit, da keine einzige der Sollwerte (Grenzwerte) überschritten werden soll. Das gewinnende Fehlersignal wird anschließend auf einen Verstärker mit proportionalem und integralem Anteil geleitet, wobei dessen Ausgang ein Bremsstoff-Durchflußventil ansteuert.

Nachteilig bei einer derartigen Regelverfahren ist, daß bei einer gewünschten Veränderung des Betriebspunktes das Triebwerk unter bestimmten Bedingungen nur mit Überschwingern folgt, was in diesem Fällen darauf zurückzuführen ist, daß die Steuermöglichkeit eines Brennstoffdurchflußventiles physikalisch begrenzt ist. So weist ein derartiges Ventil einen bestimmten Maximaldurchflußwert auf, der nicht überschritten werden kann, d. h. mehr als "voll aufgedreht" ist nicht möglich. Bei einem Sollwertsprung, beispielsweise durch plötzliches Verstellen des Gashebels wird zunächst das Fehlersignal zwischen Sollwert und Istwert zunächst gerade so groß wie der Sollwertsprung selbst. Bei großem Sollwertsprung und den üblicherweise verwendeten Regelkreisverstärkungen wird das Stellsignal in der Regel so groß, daß es außerhalb der physikalisch wirksamen Grenzen des Brennstoffdurchflußventiles gerät.

Gleichzeitig führt die auf den Integrator gegebene Regelabweichung dazu, daß dessen Ausgangswert (I-Wert) entsprechend der Integratorverstärkung hochläuft. Bei großen Sollwertsprüngen läuft dabei der Integrator in die Sättigung, so daß sowohl der P-Wert als auch der I-Wert maximal werden und eine maximale Verstellgeschwindigkeit kommandieren. Bei der daraus resultierenden Annäherung des Istwertes an den Sollwert bleibt der I-Wert solange auf "Maximalbeschleunigung", bis ein Vorzeichenwechsel des Integrator-Eingangssignals auftritt. Entsprechend dem negativen Betrag des Fehlersignales wird dann der Integrator von seinem Sättigungswert herunter integrieren. Dadurch treten bei großen Sollwertsprüngen Überschwinger bzw. Unterschwinger auf. Da derartige Überschreitungen der Sollwerte (Grenzwerte) nicht zuglässig sind, ohne daß Schäden an den Triebwerksteilen eintreten, muß eine entsprechende Sicherheit vorgesehen werden. Die als Sollwerte vorgegebenen Grenzwerte müssen somit unterhalb den physikalisch möglichen Grenzwerten liegen, wodurch ein Ausregeln des Triebwerkes an die theoretisch erzielbare Grenzwerte entfallen muß und somit die technisch möglichen Leistungsdaten nicht erreicht werden können.

Hiervon ausgehend ist es Aufgabe der vorliegenden Erfindung, ein Regelverfahren und eine Reglereinheit der gattungsgemäßen Art anzugeben, mittels der eine verbesserte Ansteuerung von nachfolgenden mechanischen Stellgliedern möglich ist. Insbesondere soll dabei das Stellsignal nur solche Werte annehmen, die innerhalb der von der nachfolgenden Stelleinheit physikalisch sinnvoll verarbeitbaren Grenzen liegt.

Erfindungsgemäß wird die Aufgabe durch im Kennzeichnungsteil des Patentanspruchs 1 und 3 angegebenen Merkmale gelöst.

Das erfindungsgemäße Verfahren hat den Vorteil, daß die bei den Grenzwerteingänge mit konstanten Werten beaufschlagt werden, die die Untergrenze bzw. die Obergrenze des von der Stelleinheit verarbeitbaren Stellsignals darstellen. Das Stellsignal wird somit unter keinen Betriebsbedingungen außerhalb des von diesen Grenzwerten definierten Bereiches liegen, wodurch ein verbessertes Regelverhalten, insbesondere eine Vermeidung von Überschwingern erzielbar ist. Dies ist darauf zurückzuführen, daß im Gegensatz zu den herkömmlichen PI-Reglern bei Annäherung des Istwertes an den Sollwert der Integratorwert nicht auf maximaler Beschleunigung bzw. Sättigung steht, sondern auf Verzögerung. Obwohl also der Istwert den Sollwert noch nicht erreicht hat integriert der Integrator bereits in Gegenrichtung, so daß das Problem eines Überschwingers wegen Integrator-Sättigung überhaupt nicht auftritt. Im kleinen Signalverhalten hingegen arbeiten der P-Regler und der I-Regler voneinander ungestört.

In vorteilhafter Weiterbildung der Erfindung umfaßt der Integrator eine mit dem Integratoreingang gekoppelte Zeit-Mittelungseinheit, deren Ausgang auf einen Integrations-Summierer geschaltet ist. Der zweite Eingang des Integrations-Summierers bildet ein mit dem Ausgang der Minimum-Auswahleinheit gekoppelter Speicher. Dies ermöglicht vorteilhafterweise, daß zwischen Hoch- und Herunterintegrieren keine Verstärkungsunterschiede bestehen.

Das erfindungsgemäße Verfahren und die Reglereinheit ist besonders vorteilhaft für digitale Regelgeräte von schnell reagierenden Regelstrecken, da hiermit aufgrund des relativ geringen Regelprogrammaufwandes die Totzeiten auf ein Minimum abgesenkt werden können.

Vorzugsweise wird das erfindungsgemäße Verfahren bei einem Mehrgrößenregelverfahren eingesetzt, bei dem mehrere Regelgrößen verarbeitet werden, und mittels einer Kleinstwert/Größtwertauswahl ein gewinnendes Regel-Abweichungssignal ermittelt wird, das dem Proportional- und Integralzweig zugeführt wird. Die Sollwerte sind dabei teilweise als Grenzwert ausgeführt, die nicht überschritten werden dürfen, so daß bei der Kleinstwert/Größtwertauswahl gewinnende Signal dasjenige Signal gewinnt, und den Stellwert beeinflußt, das dem Grenzwert am nächsten gekommen ist.

Eine weitere vorteilhafte Ausgestaltung der Regeleinheit sieht vor, daß die Eingänge von Proportionalverstärker und Integrator jeweils mit getrennten Minimum-Auswahleinheiten verbunden sind, die parallel von mehreren Regelgrößen beaufschlagt sind. Die Regelgrößen sind insbesondere bei Anwendung mit einem Gasturbinentriebwerk, Wellendrehzahlen, Temperaturen und Drücke an verschiedenen Meßpunkten der Gasturbine. Istwerte werden dabei mittels Meßaufnehmer festgestellt und mit Sollwerten verglichen. Istwerte und Sollwerte werden dazu auf einen Summierer gegeben, wodurch ein Abweichungssignal gebildet wird, das auf die Minimumauswahleinheiten geschaltet ist. Die Sollwerte können dabei auch maximale Grenzwerte darstellen, die im Betrieb nicht überschritten werden dürfen. Um ein verbessertes Regelverhalten zu erzielen sind bei bevorzugten oder allen Regelgrößen Differentialanteile enthalten. Dazu wird vorzugsweise der Istwert einem Differenzierer zugeführt, und der Ausgang des Differenzierers zusammen mit dem Abweichungssignal einem Summierer zugeführt.

Eine bevorzugte Weiterbildung der Erfindung sieht vor, daß das Abweichungssignal und das differenzierte Istwertsignal über getrennte Verstärker parallel auf zwei Summierer geschaltet sind, die wiederum mit den beiden Minimumauswahleinheiten gekoppelt sind. Hierdurch läßt sich durch angepaßte Einstellung der Verstärkungsfaktoren eine unterschiedliche Aufschaltung der Differentialanteile auf den P-Zweig und den I-Zweig des nachfolgenden Reglers einstellen. Hierdurch lassen sich die Einschwingvorgänge der verschiedenen Regelgrößen abhängig von den physikalischen Gegebenheiten optimal einstellen.

Die Erfindung wird nachfolgend anhand der beigefügten Zeichnung näher erläutert. Die dabei zeigt:
- Fig. 1:: eine schematische Darstellung der erfindungsgemäßen Regeleineiheit innem Gasturbinentriebwerk,
- Fig. 2:: ein Blockschaltbild der Regeleinheit
- Fig. 3:: ein Blockschaltbild der erfindungsgemäßen Integratorausbildung.

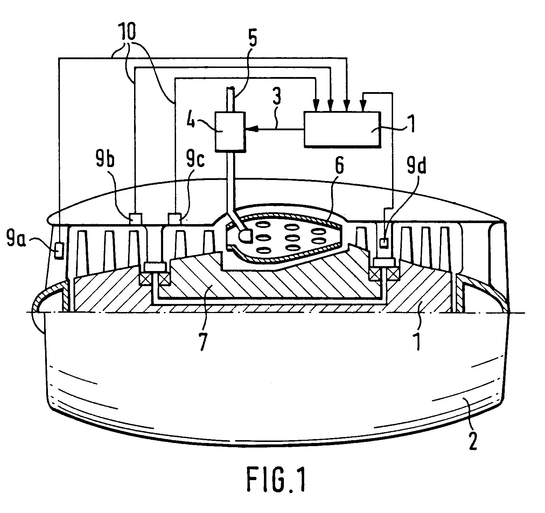

In Fig. 1 ist schematisch eine bevorzugte Anwendung des erfindungsgemäßen Regelkreises 1 zur Regelung eines Gasturbinentriebwerkes 2 dargestellt Die Regeleinheit 1 steuert dabei über die Steuerleitung 3 den Brennstoffdurchfluß durch das Brennstoffventil 4. Von einem nicht dargestellten Vorratstank und eine Förderpumpe gelangt Brennstoff über die Brennstoffleitung 5 und das Brennstoffventil 4 in die Brennkammer 6 des Gasturbinentriebwerkes 2, wo es mit verdichteter Luft vermengt und verbrannt wird.

Die Gasturbine weist im wesentlichen einen Hochdruckrotor 7, und einen Niederdrucktrotor 8 auf, die jeweils einen Verdichter und eine Turbine aufweisen. Im Gasturbinentriebwerk 2 sind an verschiedenen Stellen Meßsensoren 9a, 9b, 9c, 9d für die Ermittlung von Istwerten der in der Regeleinheit 1 verwendeten Regelgrößen gemessen werden. Dabei mißt der Meßsensor 9a die Eingangsbedingungen des Gasturbinentriebwerkes 2, insbesondere den Eingangsdruck oder die Eingangstemperatur. Die Meßsensoren 9b und 9c dienen der Ermittlung der Drehzahlen des Hochdruckrotors 7 und Niederdruckrotors 8. Der Meßsensor 9d dient der Ermittlung der Turbinentemperatur und/oder des Turbinendruckes. Die Meßsensoren 9a, 9b, 9c, 9d sind über Meßleitungen 10 mit Istwerteingängen der Regeleinheit 1 gekoppelt.

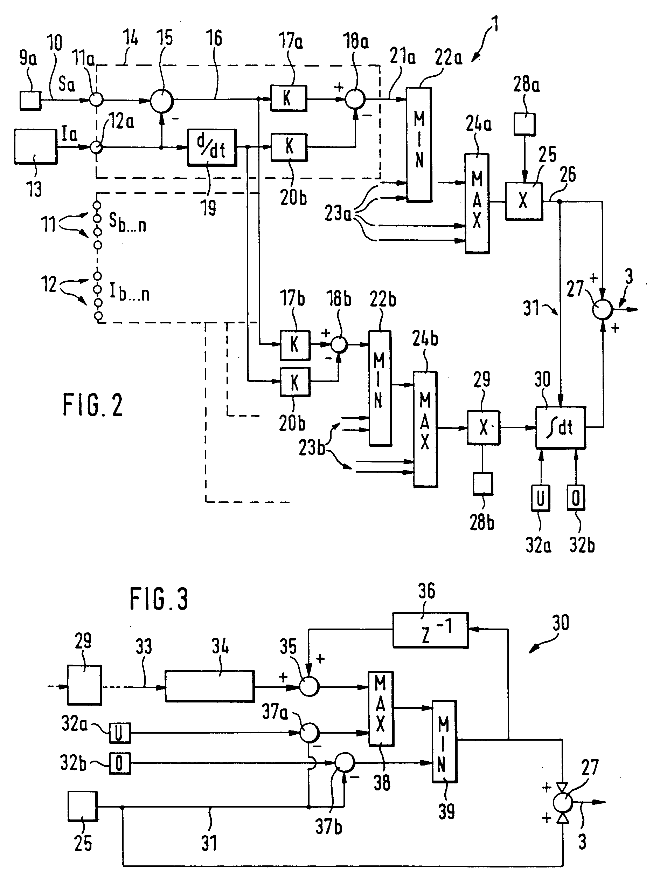

In Fig. 2 ist die Regeleinheit 1 im Blockschaltbild dargestellt. Die Regeleinheit 1 weist im wesentlichen einer Anzahl Sollwerteingänge 11 und eine gleich große Zahl Istwerteingänge 12 auf. Die Istwerteingänge 12 sind alle, wie am Beispiel des Istwerteingangs 12a dargestellt, mit Meßsensoren 9a über Leitungen 10 gekoppelt. Die Sollwerteingänge 11 sind, wie am Beispiel des Sollwerteinganges 11a dargestellt, mit Referenzeinheiten 13 verbunden, in denen die Sollwerte, bzw. Grenzwerte der einzelnen Regelgrößen gespeichert sind. Dabei können die Referenzeinheiten 13 als Stellregler, beispielsweise eines Gashebels oder in Form von gespeicherten Tabellen ausgeführt sein, in denen abhängig von Zustandsparametern Sollwerte vorgegeben werden. Die über die Eingänge 11 und 12 zugeführten Signale der einzelnen Regelgrößen werden im wesentlichen gleich verarbeitet, was beispielhaft anhand der Eingänge 11a und 12a in dem gestrichelt angedeuteten Rahmen 14 dargestellt ist. Dabei können jedoch bei einzelnen Regelgrößen abhängig von ihren Charakteristiken Abweichungen vorgesehen sein.

Der Sollwerteingang 11a und der Istwerteingang 12a werden auf einen Summierer 15 geschaltet, wobei dessen Ausgang 16 ein Abweichungssignal des Istwertes vom Sollwert darstellt. Der Ausgang 16 ist parallel mit zwei Verstärkungseinheiten 17a und 17b verbunden, die wiederum mit Summierern 18a und 18b gekoppelt sind. Der Istwerteingang 12a ist parallel zum Summierer 15 mit einem Differenzierer 19 gekoppelt, der das Istsignal nach der Zeit differenziert. Der Ausgang des Differenzierers 19 ist wiederum über 2 parallel angeordnete Verstärkungseinheiten 20a und 20b mit den Summierern 18a und 18b verbunden.

Die Summiererausgänge 21a und 21b sind auf zwei Minimum-Auswahleinheiten 22a, 22b geschaltet. Parallel zu den Summiererausgängen 21a und 21b sind mehrere weitere Eingänge 23a, 23b vorgesehen, die analog den Eingängen 11a und 12a mit den weiteren Sollwerteingängen 11 und Istwerteingängen 12 der anderen Regelgrößen gekoppelt sind. Die Minimum-Auswahleinheit 22a wählt unter den Eingängen 21a, 23a denjenigen aus, dessen Signal den geringsten Wert aufweist, d. h. den Istwert dem zugehörigen Sollwert bzw. Grenzwert bereits am nächsten gekommen ist. Der Ausgang der Minimum-Auswahleinheit 22a ist zusammen mit einem Teil der Eingänge 23a auf eine Maximum-Auswahleinheit 24a geschaltet um eine Verzögerungsbegrenzung bzw. eine Begrenzung auf Werte zu erzielen, die nicht unterschritten werden dürfen wie beispielsweise Minimaldrehzahlen etc. Analog funktionieren die Minimum-Auswahleinheit 22b und Maximum-Auswahleinheit 24b des unteren (Integral-) Zweiges.

Der Ausgang der ersten Maximum-Auswahleinheit 24a ist auf einen Proportionalverstärker 25 geschaltet, dessen Ausgang 26 wiederum mit einem Stellwert-Summierer 27 verbunden ist. Der Proportionalverstärker 25 kann dabei als Multiplizierer ausgeführt sein, und über die Linearisierungseinheit 28a mit einer Linearisierungsfunktion beaufschlagt werden.

Der Ausgang der zweiten Maximum-Auswahleinheit 24b ist über einen Multiplizierer 29 mit einem Integrator 30 verbunden. Der Multiplizierer 29 ist mit einer Linearisierungseinheit 28b verbunden. Die Linearisierung ist erforderlich, um das stark nicht lineare Verhalten eines Strahltriebwerkes zu kompensieren. Dies geschieht nicht nur zur Verbesserung der Regelungsqualität, sondern auch zur Verbesserung der Triebwerkssicherheit. Die verbesserte Sicherheit ist darauf zurückzuführen, daß ein lineares System in allen Betriebspunkten gleich gut funktioniert, d. h. eine gleich gute Ausregelung von Sollwertsprüngen und Störgrößen ermöglicht. Der Sicherheitsabstand zur Oszillationsgrenze bleibt jeweils konstant. Bei einem nicht linearen System ist dies jedoch nicht gegeben. Durch die Linearisierung wird in jedem Betriebspunkt ein annähernd lineares Verhalten des Strahltriebwerkes erzielt.

Der Integrator 30 ist einerseits mit dem Multiplizierer 29, andererseits über die Leitung 31 mit dem Ausgang des Proportionalverstärkers 25 verbunden. Ferner ist der Integrator 30 mit zwei Grenzwertgebern 32a, 32b verbunden, in welchen der untere und der obere Grenzwert dem Brennstoffventil zuführbaren Stellsignals gespeichert sind. Der Ausgang des Integrators 30 ist auf den Stellwert-Summierer 27 geschaltet, dessen Ausgang das Stellsignal bildet, welches über die Steuerleitung 3 dem Brennstoffventil 4 (Fig. 1) zufgeführt wird.

In Fig. 3 ist der Integrator 30 gemäß Fig. 2 näher erläutert. Der eigentliche Integrationseingang 33, der mit dem Ausgang des Multiplizierers 29 (Fig. 2) gekoppelt ist, ist auf einer Zeit-Mittelungseinheit 34 geschaltet. Der Ausgang der Zeit-Mittelungseinheit 34 ist auf einen Summierer 35 zusammen mit dem Ausgang einer Speichereinheit 36 geschaltet.

Der Grenzwertgeber 32a für den unteren Grenzwert ist zusammen mit dem Proportionalverstärker 25 über die Leitung 31 zugeführten Proportionalsignal (Fig. 2) auf einen ersten Summierer 37a geschaltet. Die Ausgänge der Summierer 35 und 37a werden einer Maximum-Auswahleinheit 38 zugeführt, die dasjenige Signal der beiden Eingänge passieren läßt, das den größeren Wert aufweist.

Analog ist der Grenzwertgeber 32b für den oberen Grenzwert zusammen mit der Leitung 31 einem zweiten Summierer 37b zugeführt, und dessen Ausgang ist zusammen mit dem Ausgang der Maximum-Auswahleinheit 38 einer Minimum-Auswahleinheit 39 verbunden. Der Ausgang der Minimum-Auswahleinheit 39 wird parallel einerseits auch die Speichereinheit 36 geschaltet, und andererseits auf den Stellwert-Summierer 27.

Die Schaltung gemäß Fig. 3 funktioniert folgendermaßen:
Bei Kleinsignalverhalten wirken sich die über die Leitung 31 zugeführten Proportionalanteile auf den oberen und unteren Grenzwert unwesentlich aus, so daß das im Summierer 35 gebildete Integrationssignal über die Maximum-Auswahleinheit 38 und die Minimum-Auswahleinheit 39 auf den Stellwert-Summierer 27 durchgeschaltet ist. Es ist somit ein gewöhnliches PI-Verhalten erzielbar. Bei größeren Signalsprüngen am Eingang 31 bzw. 33 tritt je nach Vorzeichen des Signalsprunges eine Begrenzung in einer der Auswahleinheiten 38 oder 39 auf, so daß das am Ausgang des Integrators 30 vorliegende Signal auf den Bereich zwischen den in den Grenzwertgebern 32a, 32b gespeicherten Grenzwerten begrenzt bleibt. Dabei sind die Ausgänge des Proportionalverstärkers und des Integrators für sich genommen nicht auf diesen Bereich beschränkt, sondern erst durch die Summenbildung tritt eine Begrenzung auf. Das führt dazu, daß wenn beispielsweise das Proportionalsignal bereits außerhalb der Grenzwerte liegt, das Integralsignal anstatt weiter aufzuintegrieren, mit umgekehrtem Vorzeichen gegensteuert.

Die Erfindung ist nicht auf die dargestellte Anwendung im Zusammenhang mit einem Gasturbinentriebwerk beschränkt. Genauso läßt sich jede andere Anwendung für ein Mehgrößenregelsystem oder ein Eingrößenregelsystem mit der erfindungsgemäßen Anordnung ausstatten. Weitere bevorzugte Anwendungen der erfindungsgemäßen Regeleinheit sind beispielsweise Regelung von Antrieben aller Art, bei denen neben einem variablen Sollwert ein oder mehrere Grenzwerte berücksichtigt werden müssen. So z. B. bei Elektromotoren, Verbrennungsmotoren und allgemein bei Verfahrenssteuerungen.

## Patentansprüche

1. Regelverfahren mit einem Proportional- und einem Integralzweig (PI-Regler) bei dem durch Differenzbildung aus einem Sollwert und einem Istwert ein Regel-Abweichungssignal gewonnen wird, und mit dem Regel-Abweichungssignale eine proportional und parallel dazu eine integrale Verstärkung zur Gewinnung eines integral und eines proportional verstärkten Regel-Abweichungssignales durchgeführt wird und dann ein Stellsignal aus der Summe des proportional und des integral verstärkten Regel-Abweichungssignale gebildet wird, dadurch gekennzeichnet, daß
- das Stellsignal zwischen einem unteren und einem oberen Stellsignal-Grenzwert limitiert wird, indem das integral verstärkte Regel-Abweichungssignal wie folgt gebildet wird:
- das Differenzsignal zwischen dem unteren Stellsignal-Grenzwert und dem proportional verstärkten Regel-Abweichungssignal wird mit einem Integrationssignal, das in einem späteren Verfahrensschritt gewonnen wird, einer Größtwertauswahl unterzogen.
- das so limitierte Signal wird zusammen mit dem Differenzsignal aus dem oberem Stellsignal-Grenzwert und dem proportional verstärkten Regel-Abweichungssignal einer Kleinstwertauswahl unterzogen,
- das so gewonnene Signal stellt das integral verstärkte Regel-Abweichungssignal dar;
- dieses integral verstärkte Regel-Abweichungssignal wird gespeichert und dient so als Anfangsbedingung für den jeweils nachfolgenden Integrationsschritt,
- das Integrationssignal wird aus dem gespeicherten Signal und dem selektierten Regel-Abweichungssignal, wobei das letztere durch einen Multiplizierer verstärkt wurde, durch Summation gebildet.

2. Regelverfahren nach Anspruch 1, dadurch gekennzeichnet, daß es eine Mehrgrößenregelung umfaßt, wobei die Regelabweichungssignale jeder Regelgröße gebildet werden und einer Kleinstwert/Größtwertauswahl zur Bildung des Regel-Abweichungssignals unterzogen werden.

3. Regelverfahren nach Anspruch 2, dadurch gekennzeichnet, daß die Regelabweichungssignale jeder Regelgröße im Proportionalzweig und im Integralzweig separat verstärkt werden, die vorverstärkten Regelabweichungen jeder Regelgröße jeweils separat einer Kleinstwertauswahl und/oder einer Größtwertauswahl unterzogen werden, und die selektierten Abweichungssignale einer proportionalen bzw. einer integralen Verstärkung unterzogen werden und zur Bildung eines Stellsignales addiert werden.

4. Regeleinheit für einen PI-Regler mit einem Istwerteingang und einem Sollwerteingang, mit einem Summierer zur Bildung des Regel-Abweichungssignales, wobei dieses Regel-Abweichungssignal sowohl auf den Eingang eines Proportionalverstärkers (25) als auch auf den Eingang eines parallel dazu geschalteten Integrators (30) geführt wird und der Ausgang der Proportionalverstärkers und der Ausgang des Integrators zur Bildung eines Stellsignales auf einen Stellwert-Summierer (27) geführt sind, gekennzeichnet durch folgende Merkmale:
- am Integrator (30) sind ein erster Grenzwertgeber (32a) für den unteren Grenzwert und ein zweiter Grenzwertgeber (32b) für den oberen Grenzwert des Stellsignals vorgesehen, die beide jeweils mit dem Ausgang (31) des Proportionalverstärkers (25) auf je einen ersten und einen zweiten Summierer (37a,37b) geschaltet sind,
- das selektierte Regel-Abweichungssignal wird in einem Integrations-Summierer (35) um das in einer Speichereinheit (36) gespeicherten Integrator-Zustandswert vergrößert und auf eine erste Maximum-Auswahleinheit (38) zusammen mit dem Ausgangssignal vom ersten Summierer (37a), zur Durchschaltung des größeren Signals, gegeben,
- der Ausgang der ersten Maximum-Auswahleinheit (38) wird zusammen mit dem Ausgang des zweiten Summierers (37b) auf eine erste Minimum-Auswahleinheit (39) zur Durchschaltung des kleineren Signales gekoppelt,
- der Ausgang der ersten Minimum-Auswahleinheit (39) ist einerseits mit dem Eingang der Speichereinheit (36) verbunden, andererseits bildet er den Ausgang des Integrators (30).

5. Regeleinheit nach Anspruch 4, dadurch gekennzeichnet, daß vor dem Integrations-Summierer (35) eine Zeit-Mitteilungseinheit (34) geschaltet ist.

6. Regeleinheit nach Anspruch 4, dadurch gekennzeichnet, daß sie eine Mehrgrößenregeleinheit ist mit einem Istwerteingang und einem Sollwerteingang für jede Regelgröße, mit Summierern zur Bildung von Regel-Abweichungssignalen, wobei ein Teil der Ausgänge dieser Summierer mit den Eingängen einer zweiten Minimumauswahleinheit (22a) verbunden ist, der übrige Teil der Ausgänge dieser Summierer mit den Eingängen einer in Kaskade zu der Minimumauswahleinheit (22a) geschalteten zweiten Maximumauswahleinheit (24a) verbunden ist, somit am Ausgang der zweiten Maximum-Auswahleinheit (24a) das relevante Regel-Abweichungssignal zur Verfügung steht.

7. Regeleinheit nach einem der Ansprüche 4 bis 6, dadurch gekennzeichnet, daß die Summierer (15) für die Bildung der Regelabweichungssignale eines Teils der Regelgrößen zusätzlich zu der zweiten Minimumauswahleinheit (22a) mit einer dritten Minimumauswahleinheit (22b) verbunden sind, die zusammen mit Ausgängen von Summierern anderer Regelgrößen eine dritte Maximumauswahleinheit (24b) beaufschlagt, und die Ausgänge dieser Maximumauswahleinheiten (24a,24b) getrennt mit dem Proportionalverstärker (25) bzw. dem Integrater (30) verbunden sind.

8. Regeleinheit nach Anspruch 7, dadurch gekennzeichnet, daß von jeder Regelgröße ein Abweichungssignal gebildet ist, und ein Istwert jeder Regelgröße auf einen Differenzierer (19) geschaltet ist, wobei das Abweichungssignal und das differenzierte Istsignal über getrennte Verstärker parallel auf zwei Summierer (18a, 18b) geschaltet sind, die wiederum mit den beiden Minimum-Auswahleinheiten (22a, 22b) verbunden sind.

## Claims

1. Control method having a proportional branch and an integral branch (PI-controller), in which method a control variation signal is produced from a desired value and an actual value by subtraction, and a proportional amplification and an integral amplification parallel thereto are carried out by means of the control variation signal in order to produce an integrally amplified control variation signal and a proportionally amplified control variation signal, and an actuating signal is then formed from the sum of the proportionally amplified and integrally amplified control variation signals, characterised in that
- the actuating signal is limited between a lower and an upper actuating signal limiting value, in that the integrally amplified control variation signal is formed as follows:
- the differential signal between the lower actuating signal limiting value and the proportionally amplified control variation signal is subjected to a maximum value selection with an integration signal which is produced in a later method step;
- the signal thus limited, together with the differential signal formed by the upper actuating signal limiting value and the proportionally amplified control variation signal, is subjected to a minimum value selection;
- the signal thus produced represents the integrally amplified control variation signal;
- this integrally amplified control variation signal is stored and thus serves as the initial condition for the respective following integration step;
- the integration signal is formed by summation from the stored signal and the selected control variation signal, the latter signal having been amplified by a multiplier.

2. Control method according to claim 1, characterised in that it comprises a multi-variable control, the control variation signals of each controlled variable being formed and subjected to a minimum-value/maximum-value selection for the formation of the control variation signal.

3. Control method according to claim 2, characterised in that the control variation signals of each controlled variable are amplified separately in the proportional branch and in the integral branch, the pre-amplified control variations of each controlled variable are respectively separately subjected to a minimum value selection and/or a maximum value selection, and the selected variation signals are subjected to a proportional and an integral amplification, respectively, and are added together for the formation of an actuating signal.

4. Control unit for a PI-controller having an actual value input and a desired value input, having a summing unit for the formation of the control variation signal, this control variation signal being conducted both to the input of a proportional amplifier (25) and to the input of an integrator (30) connected in parallel thereto, and the output of the proportional amplifier and the output of the integrator being conducted to an output summing unit (27), characterised by the following features:
- at the integrator (30) there are provided a first comparator (32a) for the lower limiting value and a second comparator (32b) for the upper limiting value of the actuating signal, the two comparators being respectively connected, with the output (31) of the proportional amplifier (25), to a respective first and second summing unit (37a, 37b),
- the selected control variation signal is increased in an integration summing unit (35) by the integrator state value stored in a storage unit (36) and is transmitted to a first maximum selection unit (38) together with the output signal from the first summing unit (37a), for passing the larger signal,
- the output of the first maximum selection unit (38), together with the output of the second summing unit (37b), is coupled to a first minimum selection unit (39) for passing the smaller signal,
- the output of the first minimum selection unit (39) is connected on the one hand to the input of the storage unit (36) and on the other hand forms the output of the integrator (30).

5. Control unit according to claim 4, characterised in that a time information unit (34) is connected upstream from the integration summing unit (35).

6. Control unit according to claim 4, characterised in that it is a multi-variable control unit having an actual value input and a desired value input for each controlled variable, having summing units for the formation of control variation signals, with some of the outputs of these summing units being connected to the inputs of a second minimum selection unit (22a), the other outputs of these summing units being connected to the inputs of a second maximum selection unit (24a) connected in cascade to the minimum selection unit (22a), the relevant control variation signal consequently being available at the output of the second maximum selection unit (24a).

7. Control unit according to one of claims 4 to 6, characterised in that, for the formation of the control variation signals of some of the controlled variables, the summing units (15), in addition to being connected to the second minimum selection unit (22a), are connected to a third minimum selection unit (22b) which, together with the outputs of summing units of other controlled variables, acts upon a third maximum selection unit (24b), and the outputs of these maximum selection units (24a, 24b) are separately connected to the proportional amplifier (25) and the integrator (30), respectively.

8. Control unit according to claim 7, characterised in that a variation signal is formed by each controlled variable, and an actual value of each controlled variable is connected to a differentiator (19), with the variation signal and the differentiated actual signal being connected by way of separate amplifiers in parallel with two summing units (18a, 18b) which are connected in turn to the two minimum selection units (22a, 22b).

## Revendications

1. Procédé de régulation comprenant une branche proportionnelle et une branche par intégration (régulateur proportionnel et par intégration), selon lequel on obtient un signal d'écart de régulation par formation de la différence entre une valeur de consigne et une valeur réelle, on effectue avec le signal d'écart de régulation une amplification proportionnelle et en parallèle, une amplification par intégration, en vue d'obtenir d'un signal d'écart de régulation amplifié de manière proportionnelle et par intégration, et l'on forme ensuite un signal de réglage en effectuant la somme du signal d'écart de régulation amplifié de manière proportionnelle et du signal d'écart de régulation amplifié par intégration, caractérisé en ce que
- le signal de réglage est limité entre une valeur limite supérieure et une valeur limite inférieure de signal de réglage, grâce au fait que le signal d'écart de régulation amplifié par intégration est formé de la manière suivante:
- le signal de différence entre la valeur limite inférieure de signal de réglage et le signal d'écart de régulation amplifié de manière proportionnelle, est soumis, avec un signal d'intégration qui est obtenu au cours d'une étape suivante du procédé, à une sélection de valeur maximale;
- le signal ainsi limité est soumis, en commun avec le signal de différence entre la valeur limite supérieure de signal de réglage et le signal d'écart de régulation amplifié de manière proportionnelle, à une sélection de valeur minimale,
- le signal ainsi obtenu représente le signal d'écart de régulation amplifié par intégration;
- ce signal d'écart de régulation amplifié par intégration est mémorisé et sert ainsi en tant que condition de départ pour le pas d'intégration respectivement suivant,
- le signal d'intégration est formé par la sommation du signal mémorisé et du signal d'écart de régulation sélectionné, ce dernier ayant été amplifié par un multiplicateur.

2. Procédé de régulation selon la revendication 1, caractérisé en ce qu'il englobe une régulation à grandeurs multiples, les signaux d'écart de régulation de chaque grandeur de régulation étant formés et soumis à une sélection de valeur minimale/valeur maximale, pour former le signal d'écart de régulation.

3. Procédé de régulation selon la revendication 2, caractérisé en ce que les signaux d'écart de régulation de chaque grandeur de régulation sont amplifiés séparément dans la branche proportionnelle et dans la branche par intégration, en ce que les écarts de régulation pré-amplifiés de chaque grandeur de régulation sont soumis chacun séparément, à une sélection de valeur minimale et/ou de valeur maximale, et en ce que le signaux d'écart sélectionnés sont soumis à une amplification respectivement proportionnelle et par intégration, et sont additionnés pour former un signal de réglage.

4. Unité de régulation pour un régulateur proportionnel et par intégration, comportant une entrée de valeur réelle et une entrée de valeur de consigne, et un additionneur destiné à former le signal d'écart de régulation, ce signal d'écart de régulation étant amené aussi bien à l'entrée d'un amplificateur proportionnel (25) qu'à l'entrée d'un intégrateur (30) en parallèle à cet amplificateur, et la sortie de l'amplificateur proportionnel ainsi que la sortie de l'intégrateur, étant amenées à un additionneur de valeur de réglage (27) pour former un signal de réglage, caractérisée par les particularités suivantes:
- sur l'intégrateur (30) sont prévus, un premier générateur de valeur limite (32a) pour la valeur limite inférieure, et un second générateur de valeur limite (32b) pour la valeur limite supérieure du signal de réglage, qui sont tous les deux connectés, chacun en commun avec la sortie (31) de l'amplificateur proportionnel (25), respectivement à un premier et un second additionneur (37a, 37b),
- le signal d'écart de régulation sélectionné est augmenté, dans un additionneur par intégration (35), de la valeur de l'état d'un intégrateur mémorisée dans une unité de mémoire (36), et est transmis à une première unité de sélection de maximum (38) en commun avec le signal de sortie du premier additionneur (37a), pour la commutation du signal le plus grand,
- la sortie de première unité de sélection de maximum (38) est couplée, en commun avec la sortie du second additionneur (37b), à une première unité de sélection de minimum (39), pour la commutation du signal plus petit,
- la sortie de la première unité de sélection de minimum (39) est d'une part reliée à l'entrée de l'unité de mémoire (36), et forme d'autre part la sortie de l'intégrateur (30).

5. Unité de régulation selon la revendication 4, caractérisée en ce qu'une unité d'indication de moyenne de temps (34) est montée en amont de l'additionneur par intégration (35).

6. Unité de régulation selon la revendication 4, caractérisée en ce qu'elle constitue une unité de régulation à grandeurs multiples comportant une entrée de valeur réelle et une entrée de valeur de consigne pour chaque grandeur de régulation, ainsi que des additionneurs pour former des signaux d'écart de régulation, une partie des sorties de ces additionneurs étant reliées aux entrées d'une seconde unité de sélection de minimum (22a), tandis que la partie restante des sorties de ces additionneurs sont reliées aux entrées d'une seconde unité de sélection de maximum (24a) montée en cascade avec l'unité de sélection de minimum (22a), de manière à disposer à la sortie de la seconde unité de sélection de maximum, du signal d'écart de régulation pertinent.

7. Unité de régulation selon l'une des revendications 4 à 6, caractérisée en ce que les additionneurs (15) pour la formation des signaux d'écart de régulation d'une partie des grandeurs de régulation, sont reliés, en plus de la seconde unité de sélection de minimum (22a), à une troisième unité de sélection de minimum (22b) qui, en commun avec des sorties d'additionneurs d'autres grandeurs de régulation, sollicite une troisième unité de sélection de maximum (24b), les sorties de ces unités de sélection de maximum (24a, 24b) étant reliées séparément, respectivement à l'amplificateur proportionnel (25) et à l'intégrateur (30).

8. Unité de régulation selon la revendication 7, caractérisée en ce que à partir de chaque grandeur de régulation, on forme un signal d'écart, et une valeur réelle de chaque grandeur de régulation est envoyée à un différentiateur (19), le signal d'écart et le signal réel différencié étant amenés, par l'intermédiaire d'amplificateurs séparés, à deux additionneurs (18a, 18b) qui sont pour leur part reliés aux deux unités de sélection de minimum (22a, 22b).
